# EUROPEAN PATENT APPLICATION

(11) **EP 3 916 655 A1**
(43) Date of publication of application: **01.12.2021**
(21) Application number: 19911704.5
(22) Date of filing: 06.03.2019
(51) Int. Cl.: G06Q 10/06, G05B 19/418, G05B 23/02

(54) **OPERATION ANALYSIS DEVICE, OPERATION ANALYSIS METHOD, OPERATION ANALYSIS PROGRAM, AND OPERATION ANALYSIS SYSTEM**

(30) Priority: 23.01.2019 JP 2019009264
(71) Applicant: OMRON Corporation, Shiokoji-dori, Shimogyo-ku, Kyoto-shi Kyoto 600-8530 (JP)
(72) Inventor: NISHIDA, Kazuki, Kyoto 619-0283 (JP)
(74) Representative: Becker, Eberhard
(86) International application number: PCT/JP2019/008946
(87) International publication number: WO 2020/152879

(57) **Abstract**

Provided is an operation analysis device or the like which can measure an operation time more accurately. The operation analysis device is provided with: an acquisition unit which acquires time series information indicating an operation performed by a worker; an association unit which associates reference time series information, to which one or a plurality of pieces of division information indicating division points of an operation are imparted, with time series information so as to maintain a time sequence; and a measurement unit which, on the basis of the time series information associated with the reference time series information to which the one or plurality of pieces of division information are imparted, measures operation times of a plurality of respective divided operations that can be obtained by dividing an operation at the division points.

## Description

### [Technical Field]

The present invention relates to an operation analysis device, an operation analysis method, an operation analysis program, and an operation analysis system.

### [Related Art]

Conventionally, one or more cameras may be installed in a manufacturing line of a product to record operations of a worker as an image or a moving image. Also, image recognition processing may be performed on the captured image or moving image to analyze the operations of the worker.

For example, Patent Literature 1 below describes an operation analysis device which acquires reference trajectory information related to an operation of a reference object between separation timings of each operation, extracts characteristic feature trajectory information at the separation timings of each operation and then acquires comparative trajectory information related to an operation of another object from a comparative video obtained by capturing another object, retrieves feature trajectory information from the comparative trajectory information and then extracts the same operation as that which has been set for the reference object, and furthermore, aggregates it based on the separation timings of continuous operation to measure and display a time required for each continuous operation.

### [Citation List]

### [Patent Literature]

[Patent Literature 1]
Japanese Patent No. 5525202

### [Summary of Invention]

### [Technical Problem]

When an operation time of a worker is measured, for example, characteristic trajectory information included in a reference trajectory may be extracted, the same feature trajectory information may be retrieved from a trajectory to be measured, and a time required for each continuous operation may be measured as in the technology described in Patent Literature 1.

However, the characteristic trajectory included in the reference trajectory does not always appear in the trajectory to be measured, and when the characteristic trajectory appears at a plurality of timings, it may be difficult to be associate them with the trajectory to be measured. Therefore, measurement of the operation time may not be accurately performed.

Therefore, the present invention provides an operation analysis device, an operation analysis method, an operation analysis program, and an operation analysis system capable of measuring an operation time with higher accuracy.

### [Solution to Problem]

An operation analysis device according to one aspect of the present disclosure includes an acquisition unit which acquires time series information indicating an operation performed by a worker, an associating unit which associates reference time series information to which one or more pieces of division information indicating division points of the operation are imparted with the time series information to maintain a time order, and a measurement unit which measures an operation time of each of a plurality of divided operations obtained by dividing the operation at the division points based on the time series information corresponding to the reference time series information to which the one or more pieces of division information are imparted.

According to this aspect, the time series information indicating the operation performed by the worker is associated with the reference time series information to which one or more pieces of division information are imparted to divide the operation into a plurality of divided operations, and thereby measurement on the operation time of each of the plurality of divided operations can be performed with higher accuracy.

In the aspect described above, the acquisition unit may acquire a plurality of pieces of time series information indicating operations of a plurality of parts of the worker that is recorded when the worker performs the operation, and the associating unit may associate the reference time series information with the time series information to maintain a time order for each of the plurality of parts.

According to this aspect, the operation performed by the worker can be divided into a plurality of divided operations for each of the plurality of parts, and the operation time can be measured for each of the plurality of parts.

In the aspect described above, the measurement unit may measure the operation time by averaging the operation times calculated based on the time series information corresponding to the reference time series information to which the one or more pieces of division information are imparted for the plurality of parts.

According to this aspect, when the operation times are averaged for the plurality of parts, the operation time of each of the plurality of divided operations can be measured more stably.

In the aspect described above, the acquisition unit may acquire the plurality of pieces of time series information indicating operations of the left and right parts of the worker.

According to this aspect, the operation performed by the worker can be divided into a plurality of divided operations for each of the left and right parts of the worker, and the operation time can be measured for each of the left and right parts.

In the aspect described above, the time series information may include a value obtained by summing magnitudes of speeds or accelerations of the plurality of parts of the worker.

According to this aspect, magnitudes of speeds or accelerations are summed for the plurality of parts, and thereby the operation time of each of the plurality of divided operations can be measured more stably.

In the aspect described above, the reference time series information may be provided for each type of worker, and the associating unit may associate the reference time series information about a worker of the same type as the type of the worker from which the time series information has been acquired with the time series information to maintain a time order.

According to this aspect, the operation time of the divided operation is measured using the reference time series information about a worker of the same type as the type of the worker from which the time series information has been acquired, and thereby the operation time of each of the plurality of divided operations can be measured with higher accuracy.

In the aspect described above, the associating unit may associate the reference time series information with the time series information to maintain a time order using a dynamic time warping method.

According to this aspect, even when the time series information and the reference time series information are different in length and phase, the time series information and the reference time series information can be appropriately associated with each other, and the operation time of each of the plurality of divided operations can be measured with higher accuracy.

An operation analysis method according to another aspect of the present disclosure includes acquiring time series information indicating an operation performed by a worker, associating a reference time series information to which one or more pieces of division information indicating division points of the operation are imparted with the time series information to maintain a time order, and measuring an operation time of each of a plurality of divided operations obtained by dividing the operation at the division points based on the time series information corresponding to the reference time series information to which the one or more pieces of division information are imparted.

According to this aspect, the time series information indicating the operation performed by the worker is associated with the reference time series information to which one or more pieces of division information are imparted to divide the operation into a plurality of divided operations, and thereby measurement on the operation time of each of the plurality of divided operations can be performed with higher accuracy.

An operation analysis program according to still another aspect of the present disclosure causes an arithmetic unit provided in an operation analysis device to function as an acquisition unit which acquires time series information indicating an operation performed by a worker, an associating unit which associates reference time series information to which one or more pieces of division information indicating division points of the operation are imparted with the time series information to maintain a time order, and a measurement unit which measures an operation time of each of a plurality of divided operations obtained by dividing the operation at the division points based on the time series information corresponding to the reference time series information to which the one or more pieces of division information are imparted.

According to this aspect, the time series information indicating the operation performed by the worker is associated with the reference time series information to which one or more pieces of division information are imparted to divide the operation into a plurality of divided operations, and thereby measurement on the operation time of each of the plurality of divided operations can be performed with higher accuracy.

An operation analysis system according to yet another aspect of the present disclosure includes an imaging unit which captures a moving image in which a worker performs an operation, an analysis unit which outputs time series information indicating the operation based on the moving image, an associating unit which associates reference time series information to which one or more pieces of division information indicating division points of the operation are imparted with the time series information to maintain a time order, and a measurement unit which measures an operation time of each of a plurality of divided operations obtained by dividing the operation at the division points based on the time series information corresponding to the reference time series information to which the one or more pieces of division information are imparted.

According to this aspect, the time series information indicating the operation performed by the worker is associated with the reference time series information to which one or more pieces of division information are imparted to divide the operation into a plurality of divided operations, and thereby measurement on the operation time of each of the plurality of divided operations can be performed with higher accuracy.

### [Advantageous Effects of Invention]

According to the present invention, it is possible to provide the operation analysis device, the operation analysis method, the operation analysis program, and the operation analysis system capable of measuring the operation time with higher accuracy.

### [Brief Description of Drawings]

Fig. 1 is a view illustrating an overview of an operation analysis system according to an embodiment of the present invention.
Fig. 2 is a diagram showing functional blocks of the operation analysis system according to the present embodiment.
Fig. 3 is a diagram showing physical components of an operation analysis device according to the present embodiment.
Fig. 4 is a diagram showing an example of associating time series information and reference time series information executed by the operation analysis device according to the present embodiment.
Fig. 5 is a diagram showing an example of measurement of an operation time executed by the operation analysis device according to the present embodiment.
Fig. 6 is a flowchart of a first example of operation time measurement processing executed by the operation analysis system according to the present embodiment.
Fig. 7 is a flowchart of a second example of the operation time measurement processing executed by the operation analysis system according to the present embodiment.

### [Description of Embodiments]

Hereinafter, an embodiment according to one aspect of the present invention (hereinafter referred to as "the present embodiment") will be described with reference to the drawings. In each of the drawings, those denoted by the same reference signs are the same or similar components.

### § 1 Application example

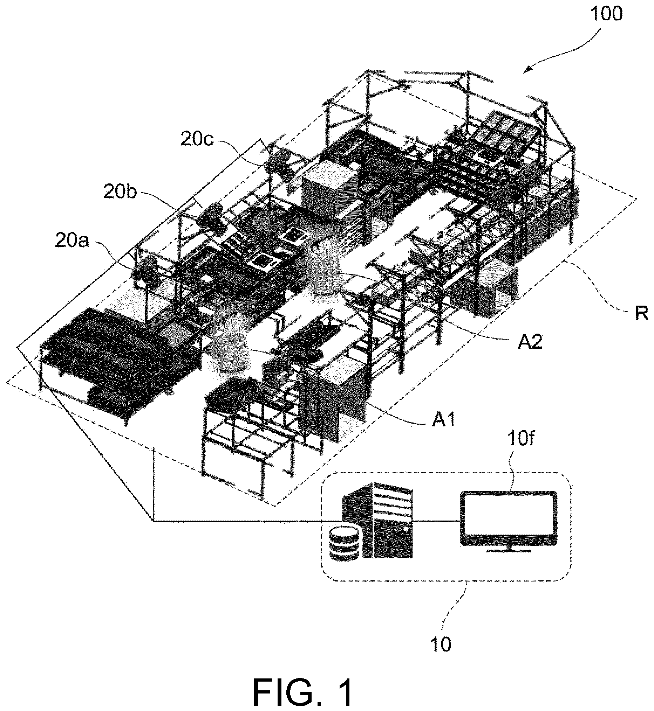

First, an example of a case to which the present invention is applied will be described with reference to Fig. 1. An operation analysis system 100 according to the present embodiment includes a first imaging unit 20a, a second imaging unit 20b, and a third imaging unit 20c that capture moving images showing an operation of a worker performed in a certain work region R. The work region R of the present example is a region including the entire manufacturing line, but the work region R may be an arbitrary region, for example, a region in which a predetermined process is performed or a region in which a predetermined element operation is performed. Here, "element operation" is a unit operation performed by the worker, and may include, for example, operations such as picking a part, disposing a part, fixing a part, and packaging a product. In the present embodiment, three processes are assumed to be performed in the work region R, and the first imaging unit 20a, the second imaging unit 20b, and the third imaging unit 20c may each be configured to capture a moving image around the worker who performs a predetermined process.

In the present example, a case in which a first worker A1 and a second worker A2 perform a predetermined operation in the work region R will be described. The first worker A1 can perform an operation such as, for example, picking, disposing, and fixing a first part, and the second worker A2 can perform an operation such as, for example, picking, disposing, and fixing a second part. Hereinafter, the first worker A1 and the second worker A2 will be collectively described as a worker A.

The operation analysis system 100 includes an operation analysis device 10. The operation analysis device 10 acquires time series information indicating an operation of the worker A such as a moving image and associates the time series information with reference time series information using, for example, a dynamic time warping (also referred to as DTW) method. One or more pieces of division information indicating division points of the operation are imparted to the reference time series information, the reference time series information is associated with the time series information, and thereby the division points of the operation can be obtained for the time series information. Then, the operation analysis device 10 measures an operation time of each of a plurality of divided operations obtained by dividing the operation indicated by the time series information at the division points.

A display unit 10f displays the time series information, the reference time series information, and the time series information and the reference time series information associated with each other. Also, the display unit 10f may also display the division points of the time series information and may also display the operation time of each of the plurality of divided operations. Further, the display unit 10f may also display the moving image showing the operation of the worker A for each of the plurality of divided operations.

As described above, according to the operation analysis device 10 according to the present embodiment, the time series information indicating the operation performed by the worker A is associated with the reference time series information to which one or more pieces of division information are imparted to divide the operation into a plurality of divided operations, and thereby measurement on the operation time of each of the plurality of divided operations can be performed with higher accuracy.

### §2 Configuration example

### [Functional configuration]

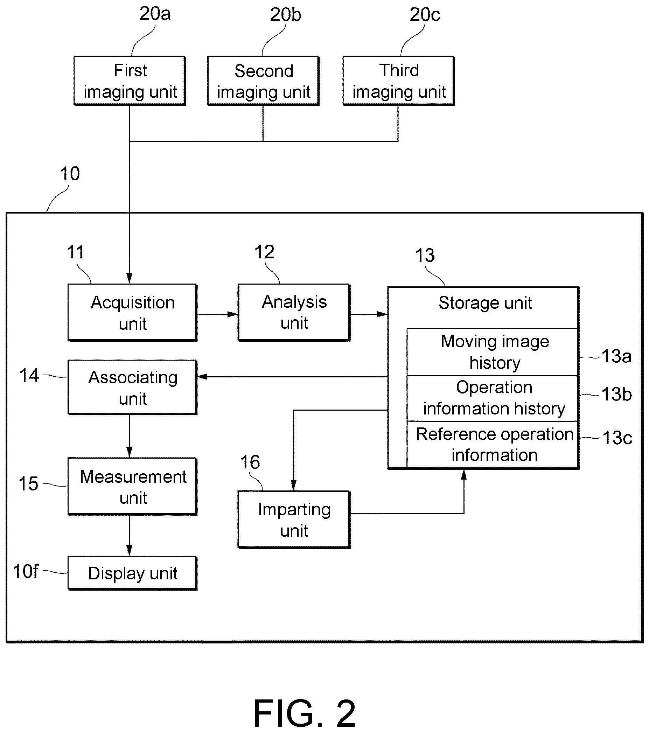

Next, an example of a functional configuration of the operation analysis system 100 according to the present embodiment will be described with reference to Fig. 2. The operation analysis system 100 includes the first imaging unit 20a, the second imaging unit 20b, the third imaging unit 20c, and the operation analysis device 10. Also, the operation analysis device 10 includes an acquisition unit 11, an analysis unit 12, a storage unit 13, an associating unit 14, a measurement unit 15, an imparting unit 16, and the display unit 10f.

### <Imaging unit>

The first imaging unit 20a, the second imaging unit 20b, and the third imaging unit 20c may each be configured by a general-purpose camera, and may capture a moving image including a scene in which the first worker A1 and the second worker A2 perform operations in the work region R. The first imaging unit 20a, the second imaging unit 20b, and the third imaging unit 20c may each capture an image of a part of the work region R, and may capture a moving image of a region smaller than the work region R. Specifically, a close-up moving image of the operation performed by the first worker A1 and the second worker A2 may be captured. The first imaging unit 20a, the second imaging unit 20b, and the third imaging unit 20c may capture, for example, a close-up moving image around the first worker A1 and the second worker A2.

Also, the first imaging unit 20a, the second imaging unit 20b, and the third imaging unit 20c may capture a plurality of moving images in which each of a plurality of parts of the work region R is captured. For example, the first imaging unit 20a may mainly capture a moving image in which the first worker A1 performs an operation, the third imaging unit 20c may mainly capture a moving image in which the second worker A2 performs an operation, and the second imaging unit 20b may capture both the moving images in which the first worker A1 performs the operation and the moving image in which the second worker A2 performs the operation. Also, the first imaging unit 20a, the second imaging unit 20b, and the third imaging unit 20c may capture moving images in which different processes are each performed at a plurality of positions in the work region R.

### <Acquisition unit>

The acquisition unit 11 acquires time series information indicating the operation performed by the worker A. Here, the time series information may be a moving image showing the operation of the worker A. However, the time series information may also be information about coordinate values indicating the operation of the worker A measured by operation capture, or information indicating the operation of the worker A measured by attaching an acceleration sensor or a gyro sensor to the worker A. The time series information (moving image in the present example) acquired by the acquisition unit 11 is transmitted to the storage unit 13 and stored as a moving image history 13a.

The acquisition unit 11 may acquire a plurality of pieces of time series information indicating operations of a plurality of parts of the worker A that is recorded when the worker A performs the operation. The plurality of parts of the worker A may be, for example, a head, both eyes, both shoulders, both elbows, both wrists, knuckles of both hands, a waist, both knees, both ankles, and the like. Also, the acquisition unit 11 may acquire a plurality of pieces of time series information indicating operations of the left and right parts of the worker A. The left and right parts of the worker A may be both eyes, both shoulders, both elbows, both wrists, knuckles of both hands, both knees, both ankles, and the like. When the plurality of pieces of time series information indicating the operations of the left and right parts of the worker A is acquired, the operation performed by the worker A can be divided into a plurality of divided operations for each of the left and right parts of the worker A, and the operation time can be measured for each of the left and right parts. Here, the left and right parts may include both hands of the worker A. In this case, the operation performed by the worker A can be divided into a plurality of divided operations for both hands of the worker A, and the operation time can be measured for both hands.

### <Analysis department>

The analysis unit 12 analyzes a moving image showing the operation of the worker A and calculates operation information including the coordinate values indicating the operation of the worker A. The operation information is an example of the time series information. The operation information may be information indicating a displacement of a typical position of the body of the worker A. The typical position of the body of the worker may be one position of the body, but it may typically be a plurality of positions. The operation information may be information indicating positions of joints of the worker A using a skeleton model. The analysis unit 12 may calculate the operation information including the coordinate values indicating the operation of the worker A from the moving image using, for example, a technology disclosed by Zhe Cao, et al. (3), "Realtime Multi-Person 2D Pose Optimization using Part Affinity Fields," arXiv: 1611.08050, 2016. Further, when the information indicating the operation of the worker A is measured by attaching an acceleration sensor or a gyro sensor to the worker A, the processing of calculating the operation information including the coordinate values indicating the operation of the worker A from the moving image using the analysis unit 12 is unnecessary.

The analysis unit 12 may calculate operation information including a value obtained by summing magnitudes of speeds or accelerations of the plurality of parts of the worker A. The analysis unit 12 may calculate operation information including, for example, a value obtained by summing magnitudes of speeds or accelerations of both hands of the worker A. When magnitudes of speeds or accelerations are summed for the plurality of parts, the operation time of each of the plurality of divided operations can be measured more stably.

### <Storage unit>

The storage unit 13 stores the moving image history 13a, an operation information history 13b, and a reference operation information 13c. The moving image history 13a includes a history of moving images captured by the first imaging unit 20a, the second imaging unit 20b, and the third imaging unit 20c. The operation information history 13b includes a history of operation information calculated by the analysis unit 12. Here, the operation information history 13b may be stored for each type of worker. "Type of worker" is a classification that represents characteristics of workers and may be, for example, a skilled worker and a beginner in work, right-handed and left-handed, male and female, and large and small in terms of physique. The reference operation information 13c includes a history of reference operation information having the time series information indicating the reference operation. The reference operation information is an example of the reference time series information and includes one or more pieces of division information indicating the division points of the operation.

### <Associating unit>

The associating unit 14 associates the reference time series information to which one or more pieces of division information indicating the division points of the operation are imparted with the time series information to maintain a time order. In the present embodiment, the associating unit 14 associates the reference operation information to which one or more pieces of division information indicating the division points of the operation are imparted with operation information acquired for the worker A to maintain a time order.

The associating unit 14 may associate the reference time series information with the time series information to maintain a time order for each of the plurality of parts of the worker A. For example, the associating unit 14 may associate time series information of a right hand of the worker A with reference time series information of the right hand or may associate time series information of a left hand of the worker A with reference time series information of the left hand. Thereby, the operation performed by the worker A can be divided into a plurality of divided operations for each of the plurality of parts, and the operation time can be measured for each of the plurality of parts.

When the reference time series information is provided for each type of the worker A, the associating unit 14 may associate the reference time series information about a worker of the same type as the type of the worker A from which the time series information has been acquired with the time series information to maintain a time order. For example, when the reference time series information is provided separately for a skilled worker and a beginner in work, the associating unit 14 may associate time series information of the skilled worker with the reference time series information of the skilled worker and may associate time series information of the beginner with the reference time series information of the beginner. Also, for example, the associating unit 14 may set workers with similar physiques as workers of the same type and associate acquired time series information thereof with the reference time series information of the worker of the same type. Here, similarity of physique may be determined by, for example, comparing a length between joints. Also, when the reference time series information is provided for each worker A, the associating unit 14 may associate the reference time series information about the same worker as the worker A from which the time series information has been acquired with the time series information to maintain a time order. When the operation time of the divided operation is measured using the reference time series information about a worker of the same type as the type of the worker A from which the time series information has been acquired, the operation time of each of the plurality of divided operations can be measured with higher accuracy.

The associating unit 14 may associate the reference time series information with the time series information to maintain a time order using the dynamic time warping method. When the dynamic time warping method is used, even when the time series information and the reference time series information are different in length and phase, the time series information and the reference time series information can be appropriately associated with each other, and the operation time of each of the plurality of divided operations can be measured with higher accuracy.

### <Measurement unit>

The measurement unit 15 measures an operation time of each of the plurality of divided operations obtained by dividing the operation of the operator A at the division points based on the time series information corresponding to the reference time series information to which one or more pieces of division information are imparted. For example, when the time series information is a moving image, the measurement unit 15 may calculate a time between the division points based on a frame rate of the moving image and measure the operation time of each of the plurality of divided operations.

The measurement unit 15 may measure the operation time by averaging the operation times calculated based on the time series information corresponding to the reference time series information to which the one or more pieces of division information are imparted for the plurality of parts. The measurement unit 15 may measure a total operation time by, for example, averaging the operation times calculated for both hands of the worker A. In this way, when the operation times are averaged for the plurality of parts, the operation time of each of the plurality of divided operations can be measured more stably.

### <Imparting unit>

The imparting unit 16 imparts one or more pieces of division information to the reference time series information. The imparting unit 16 may extract one or more feature points included in the reference time series information and impart one or more pieces of division information to the reference time series information based on the one or more feature points. Also, the imparting unit 16 may impart one or more pieces of division information to the reference time series information based on an input.

### [Hardware configuration]

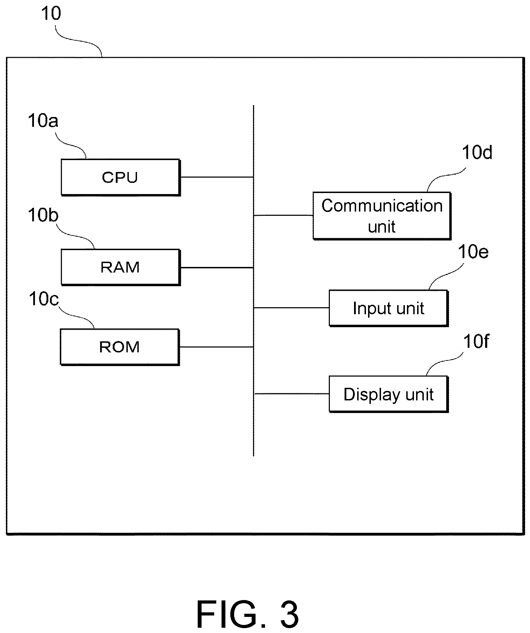

Next, an example of a hardware configuration of the operation analysis device 10 according to the present embodiment will be described with reference to Fig. 3. The operation analysis device 10 includes a central processing unit (CPU) 10a corresponding to an arithmetic device, a random access memory (RAM) 10b corresponding to the storage unit 13, a read only memory (ROM) 10c corresponding to the storage unit 13, a communication unit 10d, an input unit 10e, and the display unit 10f. These components are connected to each other via a bus so that data can be transmitted and received. Further, a case in which the operation analysis device 10 is configured by one computer will be described in the present example, but the operation analysis device 10 may be realized using a plurality of computers.

The CPU 10a is a control unit that performs control related to execution of a program stored in the RAM 10b or ROM 10c, and calculation and processing of data. The CPU 10a is an arithmetic device executing a program (operation analysis program) that divides the time series information and measures the operation times of the plurality of divided operations. The CPU 10a receives input data of various types from the input unit 10e and the communication unit 10d, displays calculation results of the input data on the display unit 10f, and stores the calculation results in the RAM 10b or the ROM 10c.

The RAM 10b is one capable of data rewriting in the storage unit 13 and may be configured by, for example, a semiconductor storage element. The RAM 10b stores the operation analysis program executed by the CPU 10a, and data such as the moving image history 13a, the operation information history 13b, and the reference operation information 13c.

The ROM 10c is one capable of reading data in the storage unit 13 and may be configured by, for example, a semiconductor storage element. The ROM 10c may store, for example, the operation analysis program and data that is not rewritten.

The communication unit 10d is an interface that connects the operation analysis device 10 to an external device. The communication unit 10d is connected to the first imaging unit 20a, the second imaging unit 20b, and the third imaging unit 20c by, for example, a local area network (LAN), and may receive moving images from the first imaging unit 20a, the second imaging unit 20b, and the third imaging unit 20c. Also, the communication unit 10d may also be connected to the Internet and receive moving images or operation information via the Internet.

The input unit 10e receives data input from a user and may include, for example, a keyboard, a mouse, and a touch panel.

The display unit 10f visually displays calculation results by the CPU 10a and may be configured by, for example, a liquid crystal display (LCD).

The operation analysis program may be stored and provided in a computer-readable storage medium such as the RAM 10b or the ROM 10c or may be provided via a communication network connected by the communication unit 10d. In the operation analysis device 10, when the CPU 10a executes the operation analysis program, operations of the acquisition unit 11, the analysis unit 12, the associating unit 14, the measurement unit 15, and the imparting unit 16 described with reference to Fig. 2 are realized. Further, these physical components are examples and may not necessarily have to be independent components. For example, the operation analysis device 10 may include a large-scale integration (LSI) in which the CPU 10a, the RAM 10b, and the ROM 10c are integrated.

### §3 Operation example

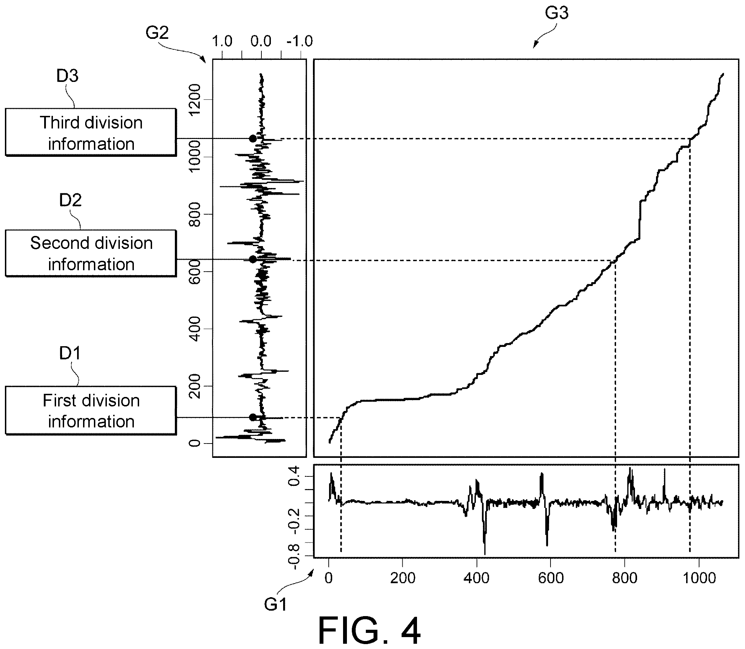

Fig. 4 is a diagram showing an example of associating time series information and reference time series information executed by the operation analysis device 10 according to the present embodiment. Fig. 4 shows a first graph G1 showing the time series information, a second graph G2 showing the reference time series information, and a third graph G3 showing an association relationship between the time series information and the reference time series information.

The first graph G1 shows a temporal change of the operation information in which time is represented by the horizontal axis and a value of the operation information of the worker A is represented by the vertical axis. In the present example, the operation information is a value obtained by summing magnitudes of speeds of both hands of the worker A. For example, the operation information is greatly changed when the worker A reaches out to grasp a part and is substantially constant when the worker A performs assembly work of the parts or the like.

The second graph G2 shows a temporal change of the reference operation information in which time is represented by the horizontal axis (the axis extending in a vertical direction in Fig. 4) and a value of the reference operation information of the worker A is represented by the vertical axis (the axis extending in a horizontal direction in Fig. 2). In the present example, the reference operation information is a value obtained by summing magnitudes of speeds of both hands of the worker A. The reference operation information may be, for example, typical operation information among a plurality of pieces of operation information acquired when the worker A repeatedly performs a specific operation.

A plurality of pieces of division information is imparted to the reference operation information. In the present example, first division information D1, second division information D2, and third division information D3 are imparted to the reference operation information.

The reference time series information is data that serves as a reference of the time series information, and the division information is data that indicates a position (that is, time) of the division point. For example, the division information may be included in the reference time series information as metadata or may be associated with the reference time series information in a mode in which it is not a part of the reference time series information.

The third graph G3 shows a warping path that associates the operation information with the reference operation information calculated by the operation analysis device 10 using the dynamic time warping method. A point of the reference operation information is associated with a point of the operation information by the warping path shown in the third graph G3. Here, the association may be one-to-one, one-to-many, or many-to-one association.

A point to which the first division information D1 is imparted in the reference operation information is associated with one point of the operation information using the warping path shown in the third graph G3. Similarly, a point to which the second division information D2 is imparted in the reference operation information is associated with another point of the operation information using the warping path shown in the third graph G3. Also, a point to which the third division information D3 is imparted in the reference operation information is associated with still another point of the operation information using the warping path shown in the third graph G3.

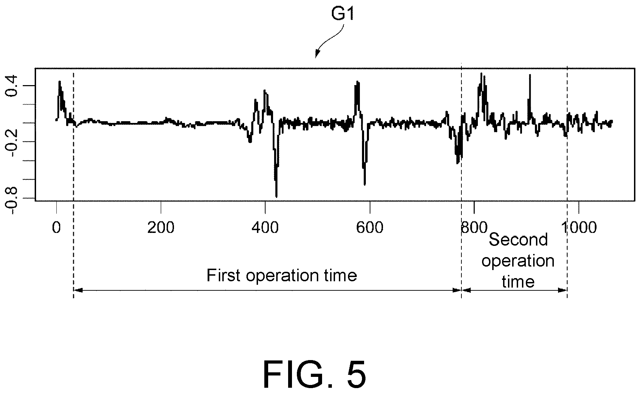

Fig. 5 is a diagram showing an example of measurement of an operation time executed by the operation analysis device 10 according to the present embodiment. Fig. 5 shows operation information in which the first division information D1, the second division information D2, and the third division information D3 are associated with each other by the association shown in Fig. 4.

The operation analysis device 10 measures operation times of the plurality of divided operations based on time intervals of the points at which the first division information D1, the second division information D2, and the third division information D3 of the operation information are associated. In a case of the present example, a first operation time from a point corresponding to the first division information D1 to a point corresponding to the second division information D2, and a second operation time from the point corresponding to the second division information D2 to a point corresponding to the third division information D3 are measured.

In this way, according to the operation analysis device 10 according to the present embodiment, even when the time series information and the reference time series information are different in length and phase, the time series information and the reference time series information can be appropriately associated with each other, and the operation time of each of the plurality of divided operations can be measured with higher accuracy.

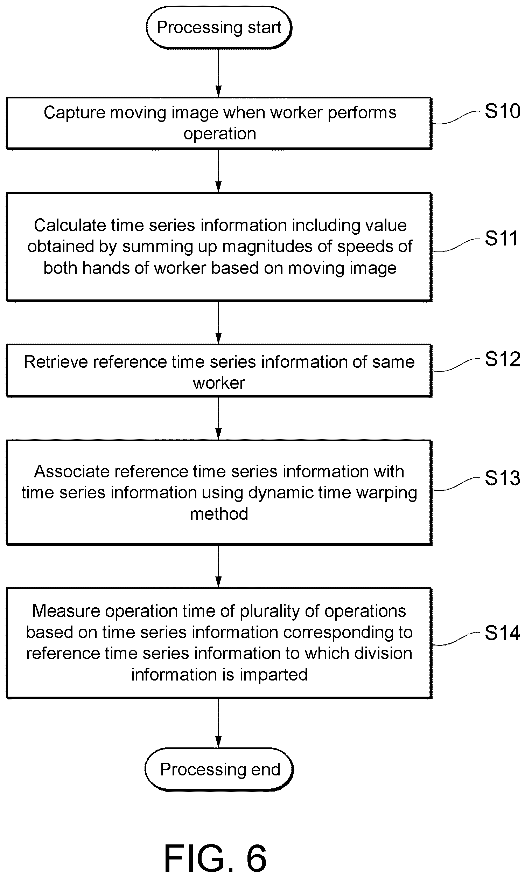

Fig. 6 is a flowchart of a first example of operation time measurement processing executed by the operation analysis system 100 according to the present embodiment. First, the operation analysis system 100 captures a moving image when the worker A performs an operation (S10).

Thereafter, the operation analysis device 10 calculates time series information including a value obtained by summing magnitudes of speeds of both hands of the worker A based on the moving image (S11). Then, the operation analysis device 10 retrieves reference time series information of the same worker (S12). Further, when reference operation information of the same worker is not stored, reference time series information about a worker with similar physique may be retrieved.

The operation analysis device 10 associates the reference time series information with the time series information using the dynamic time warping method(S13). Then, the operation analysis device 10 measures operation times of a plurality of operations based on the time series information corresponding to the reference time series information to which division information is imparted (S14). As a result, the first example of the operation time measurement processing ends.

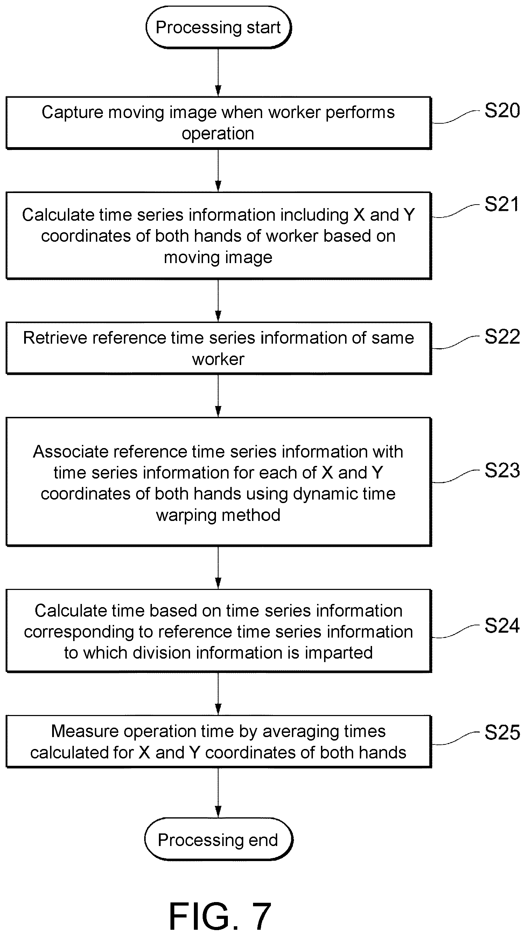

Fig. 7 is a flowchart of a second example of the operation time measurement processing executed by the operation analysis system 100 according to the present embodiment. First, the operation analysis system 100 captures a moving image when the worker A performs an operation (S20).

Thereafter, the operation analysis device 10 calculates time series information including X and Y coordinates of both hands of the worker A based on the moving image (S21). Then, the operation analysis device 10 retrieves reference time series information of the same worker (S22). Further, when reference operation information of the same worker is not stored, reference time series information about a worker with similar physique may be retrieved.

The operation analysis device 10 associates the reference time series information with the time series information for each of the X and Y coordinates of both hands using the dynamic time warping method (S23). Then, the operation analysis device 10 calculates the time based on the time series information corresponding to the reference time series information to which division information is imparted (S24) and measures the operation time by averaging times calculated for the X and Y coordinates of both hands (S25). As a result, the second example of the operation time measurement processing ends.

The embodiment of the present invention may also be described as the following additional statements. However, the embodiment of the present invention is not limited to the form described in the following additional statements. Also, the embodiment of the present invention may be a form in which descriptions between the additional statements are replaced or combined.

### [Additional statement 1]

An operation analysis device (10) including
an acquisition unit (11) which acquires time series information indicating an operation performed by a worker,
an associating unit (14) which associates reference time series information to which one or more pieces of division information indicating division points of the operation are imparted with the time series information to maintain a time order, and
a measurement unit (15) which measures an operation time of each of a plurality of divided operations obtained by dividing the operation at the division points based on the time series information corresponding to the reference time series information to which the one or more pieces of division information are imparted.

### [Additional statement 2]

The operation analysis device (10) according to claim 1, wherein
the acquisition unit (11) acquires a plurality of pieces of time series information indicating operations of a plurality of parts of the worker that is recorded when the worker performs the operation, and
the associating unit (14) associates the reference time series information with the time series information to maintain a time order for each of the plurality of parts.

### [Additional statement 3]

The operation analysis device (10) according to claim 2, wherein the measurement unit (15) measures the operation time by averaging the operation times calculated based on the time series information corresponding to the reference time series information to which the one or more pieces of division information are imparted for the plurality of parts.

### [Additional statement 4]

The operation analysis device (10) according to claim 2 or 3, wherein the acquisition unit (11) acquires the plurality of pieces of time series information indicating operations of the left and right parts of the worker.

### [Additional statement 5]

The operation analysis device (10) according to claim 4, wherein the left and right parts include both hands of the worker.

### [Additional statement 6]

The operation analysis device (10) according to any one of claims 1 to 5, wherein the time series information includes a value obtained by summing magnitudes of speeds or accelerations of the plurality of parts of the worker.

### [Additional statement 7]

The operation analysis device (10) according to any one of claims 1 to 6, wherein
the reference time series information is provided for each type of worker, and
the associating unit (14) associates the reference time series information about a worker of the same type as the type of the worker from which the time series information has been acquired with the time series information to maintain a time order.

### [Additional statement 8]

The operation analysis device (10) according to any one of claims 1 to 7, wherein the associating unit (14) associates the reference time series information with the time series information to maintain a time order using a dynamic time warping method.

### [Additional statement 9]

An operation analysis method including
acquiring time series information indicating an operation performed by a worker,
associating a reference time series information to which one or more pieces of division information indicating division points of the operation are imparted with the time series information to maintain a time order, and
measuring an operation time of each of a plurality of divided operations obtained by dividing the operation at the division points based on the time series information corresponding to the reference time series information to which the one or more pieces of division information are imparted.

### [Additional statement 10]

An operation analysis program which causes an arithmetic unit provided in an operation analysis device (10) to function as
an acquisition unit (11) which acquires time series information indicating an operation performed by a worker,
an associating unit (14) which associates reference time series information to which one or more pieces of division information indicating division points of the operation are imparted with the time series information to maintain a time order, and
a measurement unit (15) which measures an operation time of each of a plurality of divided operations obtained by dividing the operation at the division points based on the time series information corresponding to the reference time series information to which the one or more pieces of division information are imparted.

### [Additional statement 11]

An operation analysis system (100) including
an imaging unit which captures a moving image in which a worker performs an operation,
an analysis unit which outputs time series information indicating the operation based on the moving image,
an associating unit (14) which associates reference time series information to which one or more pieces of division information indicating division points of the operation are imparted with the time series information to maintain a time order,
a measurement unit (15) which measures an operation time of each of a plurality of divided operations obtained by dividing the operation at the division points based on the time series information corresponding to the reference time series information to which the one or more pieces of division information are imparted.

## Claims

1. An operation analysis device comprising:
an acquisition unit which acquires time series information indicating an operation performed by a worker;
an associating unit which associates reference time series information to which one or more pieces of division information indicating division points of the operation are imparted with the time series information to maintain a time order; and
a measurement unit which measures an operation time of each of a plurality of divided operations obtained by dividing the operation at the division points based on the time series information corresponding to the reference time series information to which the one or more pieces of division information are imparted.

2. The operation analysis device according to claim 1, wherein
the acquisition unit acquires a plurality of pieces of time series information indicating operations of a plurality of parts of the worker that is recorded when the worker performs the operation, and
the associating unit associates the reference time series information with the time series information to maintain a time order for each of the plurality of parts.

3. The operation analysis device according to claim 2, wherein the measurement unit measures the operation time by averaging the operation times calculated based on the time series information corresponding to the reference time series information to which the one or more pieces of division information are imparted for the plurality of parts.

4. The operation analysis device according to claim 2 or 3, wherein the acquisition unit acquires the plurality of pieces of time series information indicating operations of left and right parts of the worker.

5. The operation analysis device according to any one of claims 1 to 4, wherein the time series information includes a value obtained by summing magnitudes of speeds or accelerations of the plurality of parts of the worker.

6. The operation analysis device according to any one of claims 1 to 5, wherein
the reference time series information is provided for each type of worker, and
the associating unit associates the reference time series information about a worker of the same type as the type of the worker from which the time series information has been acquired with the time series information to maintain a time order.

7. The operation analysis device according to any one of claims 1 to 6, wherein the associating unit associates the reference time series information with the time series information to maintain a time order using a dynamic time warping method.

8. An operation analysis method comprising:
acquiring time series information indicating an operation performed by a worker;
associating a reference time series information to which one or more pieces of division information indicating division points of the operation are imparted with the time series information to maintain a time order; and
measuring an operation time of each of a plurality of divided operations obtained by dividing the operation at the division points based on the time series information corresponding to the reference time series information to which the one or more pieces of division information are imparted.

9. An operation analysis program which causes an arithmetic unit provided in an operation analysis device to function as:
an acquisition unit which acquires time series information indicating an operation performed by a worker;
an associating unit which associates reference time series information to which one or more pieces of division information indicating division points of the operation are imparted with the time series information to maintain a time order; and
a measurement unit which measures an operation time of each of a plurality of divided operations obtained by dividing the operation at the division points based on the time series information corresponding to the reference time series information to which the one or more pieces of division information are imparted.

10. An operation analysis system comprising:
an imaging unit which captures a moving image in which a worker performs an operation;
an analysis unit which outputs time series information indicating the operation based on the moving image;
an associating unit which associates reference time series information to which one or more pieces of division information indicating division points of the operation are imparted with the time series information to maintain a time order; and
a measurement unit which measures an operation time of each of a plurality of divided operations obtained by dividing the operation at the division points based on the time series information corresponding to the reference time series information to which the one or more pieces of division information are imparted.
